(19) Europäisches Patentamt
European Patent Office
Office européen des brevets

(11) EP 1 092 744 B1

(12) EUROPEAN PATENT SPECIFICATION

(45) Date of publication and mention of the grant of the patent:
**08.03.2006 Bulletin 2006/10**

(21) Application number: **99912049.6**

(22) Date of filing: **29.03.1999**

(51) Int Cl.:
*C08J 5/24 (2006.01)* *C08F 283/01 (2006.01)*
*C08F 290/06 (2006.01)* *C08J 3/24 (2006.01)*

(86) International application number:
**PCT/JP1999/001601**

(87) International publication number:
**WO 2000/058390 (05.10.2000 Gazette 2000/40)**

# (54) THERMOSETTING PREPREG COMPOSITION AND PROCESS FOR PRODUCING THE SAME

HITZHÄRTENDE PREPREGZUSAMMENSETZUNG UND VERFAHREN ZU IHRER HERSTELLUNG

COMPOSITION DE PREIMPREGNE THERMODURCISSABLE ET SON PROCEDE DE PRODUCTION

(84) Designated Contracting States:
**AT BE CH CY DE DK ES FI FR GB GR IE IT LI LU MC NL PT SE**

(43) Date of publication of application:
**18.04.2001 Bulletin 2001/16**

(73) Proprietor: **Showa Denko K.K.**
**Tokyo 105-8518 (JP)**

(72) Inventors:
- **OHTANI, Kazuo**
  **Kumagaya-shi,**
  **Saitama 360-0831 (JP)**
- **YAMAMOTO, Tomio**
  **Honjo-shi,**
  **Saitama 367-0034 (JP)**
- **SENDAI, Hidetake**
  **Kawasaki-shi,**
  **Kanagawa 213-0001 (JP)**
- **SUGITA, Shuichi**
  **Minato-ku,**
  **Tokyo 105-8518 (JP)**
- **KAMATA, Hirotoshi,**
  **Showa Denko K K Ctr. Res. Lab.**
  **Kawasaki-shi,**
  **Kanagawa 210-0867 (JP)**
- **WATANABE, Takeo,**
  **Showa Denko K K Ctr. Res. Lab.**
  **Chiba-shi,**
  **Chiba 267-0056 (JP)**

(74) Representative: **Strehl Schübel-Hopf & Partner**
**Maximilianstrasse 54**
**80538 München (DE)**

(56) References cited:
**JP-A- 5 057 828**
**JP-A- 5 286 046**
**JP-A- 9 077 836**
**JP-A- 9 296 016**
**JP-A- 10 067 865**
**JP-A- 11 106 459**
**JP-A- 54 143 493**
**US-A- 4 666 954**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 092 744 B1

## Description

### Technical Field

The present invention relates to a thermosetting prepreg composition in the form of a sheet, roll, cylinder or the like for molding which is composed mainly of an unsaturated polyester resin and/or vinyl ester resin and a fiber reinforcing material and/or filler, and to a process for its production.

### Background Art

Fiber-reinforced plastics (hereunder, "FRPs") used as structural materials for molded articles, buildings and the like that require high strength are generally prepared by combining inorganic or organic reinforcing materials such as glass fibers or carbon fibers with what are known as thermosetting resins, such as epoxy resins, unsaturated polyester resins and vinyl ester resins (also known as epoxy acrylate resins).

Prepregs employing thermosetting resins are generally produced by a process in which a thermosetting resin diluted with a non-reactive solvent is used to impregnate glass fibers, carbon fibers or another fibrous substrate, after which drying and removal of the non-reactive solvent by heat or the like and B-staging (thickening) of the thermosetting resin are accomplished simultaneously, or by a process in which a solvent-free thermosetting resin is used to impregnate glass fibers, carbon fibers or another fibrous substrate, after which B-staging is accomplished by heat or the like; as molding materials they are characterized by a lack of stickiness at normal temperature, excellent workability for cutting, etc., and easy manageability, while such materials have recently become attractive from the standpoint of the working environment and the earth environment, and are described in "Dictionary of Practical Plastic Terms", 1989, ed. by Plastics Dept. of the Osaka Municipal Industrial Research Center, p.592, and elsewhere.

Generally speaking, prepregs are thermoset in the form of sheets, mats or the like and used as FRPs for a variety of uses.

According to the present invention, the term "B-stage" will be used as a gauge indicating progression to setting reaction of the thermosetting resin, and it refers to the molding material in a state of plasticity whereby it is softened or melts by heat but will not fully dissolve in solvents, as a stage intermediate between the soluble, melting A-stage and the non-soluble, non-melting C-stage. Such prepregs are typically materials in the B-stage, and are described as the "B-stage" on page 522 of "Dictionary of Practical Plastic Terms" mentioned above.

One method of B-staging of thermosetting resins for prepreg production involves promoting polymerization reaction of part of the thermosetting resin starting material and suspending the polymerization reaction at the appropriate B-stage, but in practice it is difficult to always reach a consistent B-stage with normal production steps. Particularly in the case of resins containing monomers with radical polymerizable unsaturated groups such as unsaturated polyester resins or vinyl ester resins, it is difficult to consistently reach the B-stage (degree of polymerization) when attempting B-staging by pre-polymerization of the resin and radical polymerizable unsaturated compound.

Another known method for B-staging in the production of prepregs without polymerization reaction of the thermosetting resin starting material is the following.

Specifically, when the polymerizable unsaturated compound is an unsaturated polyester resin, known thickening methods include methods of adding magnesium oxide, such as disclosed in Japanese Unexamined Patent Publications No. 62-73914, No. 62-73915, No. 62-73916 and No. 62-73917, but it has generally been difficult to control the viscosity in such cases.

When the polymerizable unsaturated compound is a vinyl ester resin, one known method of B-staging involves, for example, reacting a diisocyanate with the hydroxyl groups in the vinyl ester resin skeleton or with carboxyl groups pendant on the hydroxyl groups; however, since this B-staging reaction is greatly affected by trace moisture and active groups in the resin, it is difficult to consistently reach the B-stage by this method as well.

In the aforementioned thickening methods based on magnesium oxide addition or diisocyanate use, since the reactive diluting agent, such as styrene monomer in the resin, does not contribute to the thickening reaction for the vinyl ester resin or unsaturated polyester resin, the reactive diluting agent separates or drips during storage of the prepreg, and leads to problems such as odor during working.

Japanese Unexamined Patent Publication No. 6-287524 discloses a process whereby a gelling agent is added to the prepreg material prior to B-staging to prepare a disintegrating jelly state, but it is difficult to achieve further adjustment to the B-stage from the jelly state, and therefore the problems of B-staging methods for unsaturated polyester resins and vinyl ester resins have not been solved by this process.

### Disclosure of the Invention

Under these circumstances, it is an object of the present invention to provide a thermosetting prepreg composition in the form of a sheet, roll, tube, cylinder or the like, which facilitates adjustment of thermosetting resins such as unsaturated polyester resins and vinyl ester resins to the B-stage, and allows the B-stage to be consistently reached, as well as a process for its production.

In order to achieve this object, the invention provides a thermosetting prepreg composition prepared by photopolymerization of a composition comprising a polymerizable unsaturated compound containing an unsaturated polyester resin and/or vinyl ester resin, a fiber reinforcing material and/or filler, a photopolymerization initiator and a thermal polymerization initiator, for pre-polymerization in such a manner that a portion of the unsaturated groups of polymerizable unsaturated compound and the thermal polymerization initiator remain.

The invention further provides a process for the production of a thermosetting prepreg composition, which comprises subjecting a composition comprising a polymerizable unsaturated compound containing an unsaturated polyester resin and/or vinyl ester resin, a fiber reinforcing material and/or filler, a photopolymerization initiator and a thermal polymerization initiator, to pre-polymerization by irradiation with visible light and/or near infrared light.

## Best Mode for Carrying Out the Invention

The unsaturated polyester resin used for the invention will generally be a condensation product (an unsaturated polyester) of an esterification reaction between a polyhydric alcohol and an unsaturated polybasic acid (and a saturated polybasic acid if necessary), which has been dissolved in a polymerizable monomer such as styrene, and such resins are described in "Polyester Resin Handbook" (1988, Nikkan Industrial Journal) and "Dictionary of Paint Terms" (1993, Coloring Materials Society).

The vinyl ester resin, also known as epoxy acrylate resin, may be a compound (vinyl ester) having polymerizable unsaturated bonds produced by a ring-opening reaction between a compound with glycidyl groups (epoxy groups) and the carboxyl groups of a carboxyl compound with polymerizable saturated bonds, such as acrylic acid, and such resins are described in "Polyester Resin Handbook" (1988, Nikkan Industrial Journal) and "Dictionary of Paint Terms" (1993, Coloring Materials Society).

The unsaturated polyester used as the starting material for these resins may be produced by a known process, and it may be produced using as acid components, specifically, saturated polybasic acids with no active unsaturated groups or their anhydrides, such as phthalic anhydride, isophthalic acid, terephthalic acid, tetrahydrophthalic acid and adipic acid, or unsaturated polybasic acids with active unsaturated bonds or their anhydrides, such as fumaric acid, maleic anhydride, maleic acid and itaconic acid, and as alcohol components, polyhydric alcohols such as ethyleneglycol, propyleneglycol, diethyleneglycol, dipropyleneglycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, ethylene oxide addition products of bisphenol A and propylene oxide addition products of bisphenol A.

The vinyl ester may also be produced by a publicly known process, and it may be an epoxy (meth)acrylate obtained by addition reaction using an epoxy resin and acrylic acid or methacrylic acid as components, or a saturated polyester (meth)acrylate or unsaturated polyester (meth)acrylate obtained by a reaction using as components a saturated polyester or unsaturated polyester with terminal carboxyl groups obtained using as components a saturated dicarboxylic acid and saturated dicarboxylic acid or either type of dicarboxylic acid with a polyhydric alcohol, and an epoxy compound containing an $\alpha,\beta$-unsaturated carboxylic acid ester group.

As examples of starting materials to be used for the production of vinyl esters there may be mentioned bisphenol A diglycidyl ethers and their high molecular homologues, and novolac polyglycidyl ethers, etc.

As examples of saturated dicarboxylic acids to be used for the production of vinyl esters there may be mentioned dicarboxylic acids with no active unsaturated groups, such as phthalic acid, isophthalic acid, terephthalic acid, tetrahydrophthalic acid, adipic acid and sebacic acid. As examples of unsaturated dicarboxylic acids there may be mentioned dicarboxylic acids with active unsaturated groups, such as fumaric acid, maleic acid, maleic anhydride and itaconic acid. As examples of polyhydric alcohol components there may be mentioned polyhydric alcohols such as ethyleneglycol, propyleneglycol, diethyleneglycol, dipropyleneglycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, ethylene oxide addition products of bisphenol A and propylene oxide addition products of bisphenol A.

Glycidyl methacrylate may be mentioned as a representative example of an epoxy compound containing $\alpha$, $\beta$-unsaturated carboxyl acid ester groups.

Unsaturated polyesters or vinyl esters, to be used in resins and the like, preferably have a high unsaturation degree, and especially preferred are those with about 100-800 unsaturated group equivalents (molecular weight per unsaturated group). Those with less than 100 unsaturated group equivalents are difficult to synthesize, and those with over 800 cannot give cured products with high hardness.

The unsaturated polyester resin or vinyl ester resin to be used for the invention may have a polymerizable unsaturated compound with a radical polymerizable unsaturated group (vinyl-based monomer) combined with the unsaturated polyester or vinyl ester, and a representative example of such a vinyl-based monomer is styrene monomer.

The monomer with a radical polymerizable unsaturated group to be combined with the resin, etc. of the invention is important for increasing the kneading and impregnation properties of the resin, etc. with respect to the fiber reinforcing material and filler during production of the thermosetting prepreg composition and for improving the hardness, strength, chemical resistance and moisture resistance of the cured composition; it may normally be added at 10-250 parts by weight, and preferably 20-100 parts by weight, per 100 parts by weight of the unsaturated polyester or vinyl ester. If the addition is at less than 10 parts by weight the resin, etc. may have higher viscosity thus hindering its impregnation into the fiber reinforcing material or filler and rendering it unsuitable for molding, and if it is at greater than 250 parts by weight a cured product with high hardness may not be obtained, the heat resistance may be unsatisfactory and the product will tend to be unsuitable as an FRP material.

Styrene monomer is preferably used as the monomer with a radical polymerizable unsaturated group, but all or a portion of the styrene monomer may be replaced with another monomer with a radical polymerizable unsaturated groups, such as chlorostyrene, methyl methacrylate or ethyleneglycol dimethacrylate.

The fiber reinforcing material used for the invention may be inorganic or organic fibers, and for example, known fibers such as glass fibers, carbon fibers, aramid fibers, polyethylene terephthalate fibers and vinylon fibers may be used. These fibers may, of course, be used in combination. They may usually be used in an amount of 5-300 parts by weight, and preferably 10-100 parts by weight, per 100 parts by weight of the resin, etc.

The filler to be used for the invention may be a simple filler with or without a fiber reinforcing material. Fillers include inorganic fillers and organic fillers or polymers; as inorganic fillers there may be used known fillers such as calcium carbonate, talc, clay, glass powder, glass beads, silica, aluminum hydroxide, barium sulfate and titanium oxide. These inorganic fillers may, of course, be used in combination. An inorganic filler may usually be used in an amount of 0-300 parts by weight, and preferably 10-200 parts by weight, per 100 parts by weight of the polymerizable unsaturated compound. If the inorganic filler is included at greater than 300 parts by weight the viscosity of the polymerizable unsaturated compound may be increased, thus impairing the impregnation property and tending to result in residual bubbles in the resin, or the prepreg may lack fluidity during molding, thus making it more difficult to achieve close contact with the mold, while also reducing the overall quality.

As organic fillers or polymers that may be combined with the composition of the invention there may be used, for example, a known polystyrene, polyvinyl acetate, polymethyl methacrylate, polyethylene, polyvinylidene chloride microballoons, polyacrylonitrile microballoons, etc., which also have effects as shrinkage reducing materials. The amount thereof to be used for the purpose of shrinkage reduction may usually be 0-40 parts by weight, and preferably 5-30 parts by weight, per 100 parts by weight of the polymerizable unsaturated compound. If the shrinkage reducing material is used at greater than 40 parts by weight the viscosity may be too great, thus impairing the molding properties and reducing the smoothness and heat resistance of the cured surface.

A pigment may also be used in the thermosetting prepreg composition of the invention. There are no particular restrictions on the type used, and it may be any organic pigment or inorganic pigment. It may be added at up to 20 parts by weight and preferably up to 10 parts by weight, with respect to 100 parts by weight of the polymerizable unsaturated compound.

As photopolymerization initiators with photosensitivity in any desired wavelength range of visible light or the near infrared light region to be used according to the invention there may be mentioned combinations of cationic dyes represented by the following general formula (1):

$$D^+ \cdot A^- \qquad (1)$$

wherein $D^+$ is a methine-, polymethine-, xanthene-, oxazine-, thiazine-, arylmethane- or pyrillium-based dye cation with photosensitivity to any desired wavelength range of visible light or the near infrared light region, and $A^-$ is any anion, and organic boron compounds represented by the following general formula (2):

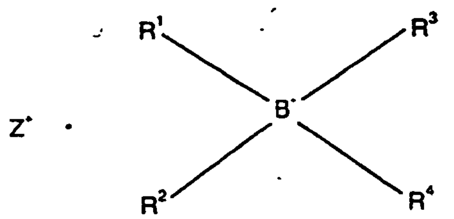

(2)

wherein $Z^+$ represents any cation, and $R^1$, $R^2$, $R^3$ and $R^4$ each independently represent an alkyl, aryl, acyl, aralkyl,

alkenyl, alkynyl, silyl or heterocyclic group or a halogen atom.

An alkyl group for $R^1$, $R^2$, $R^3$ and $R^4$ in general formula (2) above may have at least one substituent, specifically preferred ones being substituted or unsubstituted linear or branched alkyl groups of 1-12 carbons, among which there may be mentioned methyl, ethyl, n-propyl, isopropyl, n-butyl, isobutyl, sec-butyl, tert-butyl, n-pentyl, n-hexyl, n-octyl, dodecyl, cyanomethyl, 4-chlorobutyl, 2-diethylaminoethyl and 2-methoxyethyl groups.

An aryl group for $R^1$, $R^2$, $R^3$ and $R^4$ in general formula (2) above may have at least one substituent, specifically preferred ones being substituted or unsubstituted aryl groups, among which there may be mentioned phenyl, tolyl, xylyl, mesityl, 4-methoxyphenyl, 2-methoxyphenyl, 4-n-butylphenyl, 4-tert-butylphenyl, naphthyl, anthryl, phenantolyl, 4-nitrophenyl, 4-trifluoromethylphenyl, 4-fluorophenyl, 4-chlorophenyl and 4-dimethylaminophenyl groups.

An aralkyl group for $R^1$, $R^2$, $R^3$ and $R^4$ in general formula (2) above may have at least one substituent, specifically preferred ones being substituted or unsubstituted aralkyl groups, among which there may be mentioned benzyl, phenethyl, 1-naphthylmethyl, 2-naphthylmethyl and 4-methoxybenzyl groups.

An alkenyl group for $R^1$, $R^2$, $R^3$ and $R^4$ in general formula (2) above may have at least one substituent, specifically preferred ones being substituted or unsubstituted alkenyl groups, among which there may be mentioned vinyl, propenyl, butenyl and octenyl groups.

An alkynyl group for $R^1$, $R^2$, $R^3$ and $R^4$ in general formula (2) above may have a substituent.

A heterocyclic group for $R^1$, $R^2$, $R^3$ and $R^4$ in general formula (2) above may have at least one substituent, specifically preferred ones being substituted or unsubstituted heterocyclic groups, among which there may be mentioned pyridyl, 4-methylpyridyl, quinolyl and indolyl groups.

As examples of the cation [$Z^+$] in general formula (2) above there may be mentioned organic cations such as quaternary ammonium cation, quaternary pyridinium cation, quaternary quinolium cation, diazonium cation, tetrazolium cation, sulfonium cation and oxosulfonium cation; metal cations such as sodium, potassium, lithium, magnesium and calcium; (organic) compounds with cationic charges on oxygen atoms such as flavylium and pyranium salts; carbon cations such as tropylium and cyclopropylium; halogenium cations such as iodonium, and cations of compounds of metals such as arsenic, cobalt, palladium, chromium, titanium, tin and antimony, all of which have no photosensitivity to visible light or to near infrared light region.

As examples of organic boron compounds represented by general formula (2) there may be mentioned tetramethylammonium n-butyltriphenyl borate, tetraethylammonium isobutyltriphenyl borate, tetra-n-butylammonium n-butyltri (4-tert-butylphenyl) borate, tetra-n-butylammonium n-butyltrinaphthyl borate, tetra-n-butylammonium methyltri(4-methylnaphthyl) borate, triphenylsulfonium n-butyltriphenyl borate, triphenyloxosulfonium n-butyltriphenyl borate, triphenyloxonium n-butyltriphenyl borate, N-methylpyridium n-butyltriphenyl borate, tetraphenylphosphonium n-butyltriphenyl borate and diphenyliodonium n-butyltriphenyl borate.

By combining the organic boron compound with the cationic dye with a photosensitive wavelength in the visible light or near infrared range, the dye is excited upon exposure to light in the wavelength of its photosensitive region, and upon electron transfer with the organic boron compound, the dye loses color while generating radicals, and polymerization reaction of the copresent polymerizable unsaturated compound thereby occurs.

Unlike the conventionally known dye sensitized photopolymerization reaction, an irreversible decoloration reaction occurs in the photopolymerization reaction of the invention, and therefore light absorption by the dye itself does not interfere with permeation of the irradiated light, and the prepreg or its cured product does not undergo coloration by the color of the dye.

Thus, as will be explained below, the counter ion to the dye cation with photosensitivity in the visible light or near infrared region to be used for the invention may be a tetracoordinated boron anion, but the cationic portion as the counter ion to the organic boron compound is preferably a colorless cation with no absorption of visible light, for uses in which coloration of the composition and/or the cured product is a problem.

Examples of combinations of these cationic dyes and organic boron compounds are described in detail in Japanese Unexamined Patent Publication No. 3-111402, No. 3-179003, No. 4-146905, No. 4-261405, No. 4-261406 and No. 5-194619. Specific examples of [$D^+$] of the cationic dye are shown in Tables 1 and 2.

Preferred for use among these are cyanine-based and styryl-based dyes, which are polymethine-based dyes, and triarylmethane-based dyes. Cyanine-based dyes generally tend to undergo electron transfer with organic boron compounds easily and therefore facilitate the reaction of the invention, while triarylmethane-based dyes are preferred because they result in very low coloration of prepregs with time.

Table 1

| No. | Chemical structure | Maximum absorption wavelength (TMPT) |
|---|---|---|
| 1 | 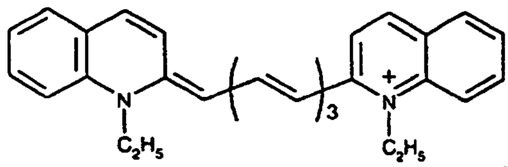 | 820 nm |
| 2 | 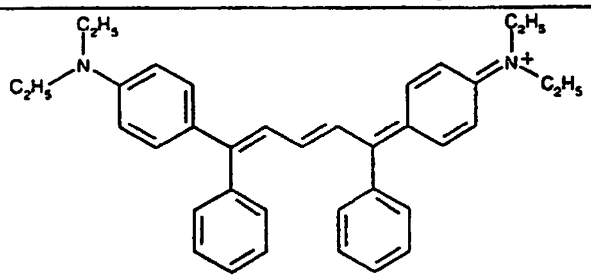 | 830 nm |
| 3 | 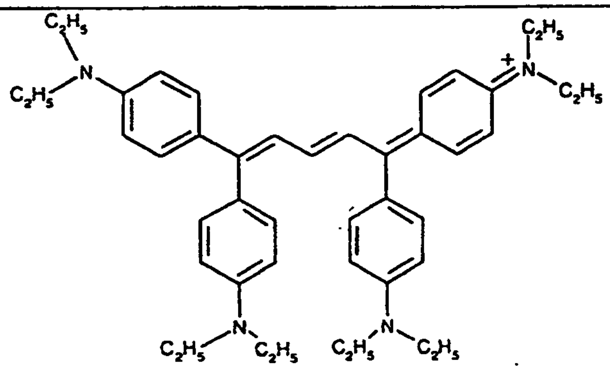 | 822 nm |
| 4 | 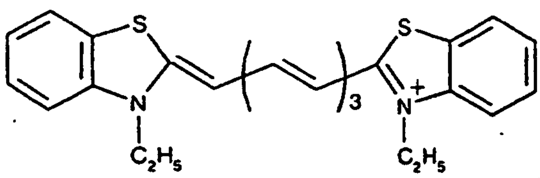 | 768 nm |
| 5 | 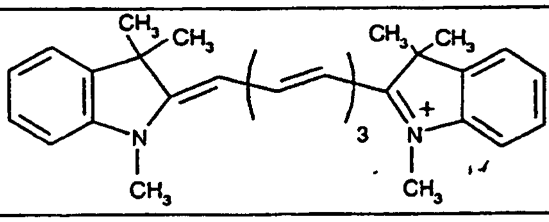 | 748 nm |

Table 1 (cont.)

| No. | Chemical structure | Maximum absorption wavelength (TMPT) |
|---|---|---|
| 6 | 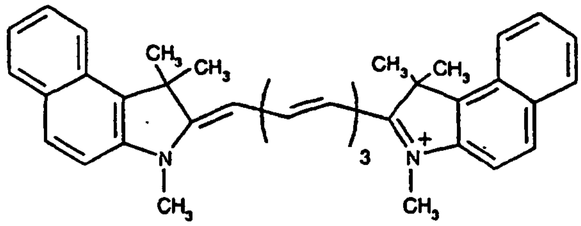 | 785 nm |
| 7 | 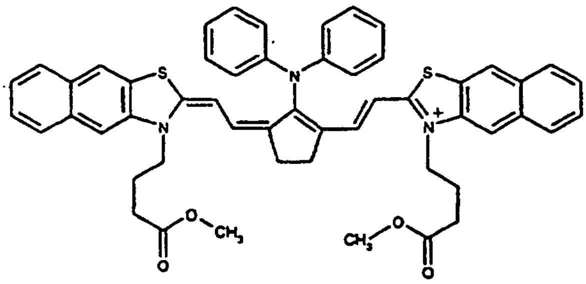 | 828 nm |
| 8 | 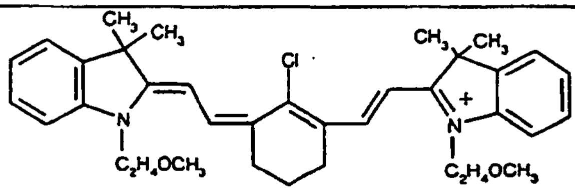 | 787 nm |
| 9 | 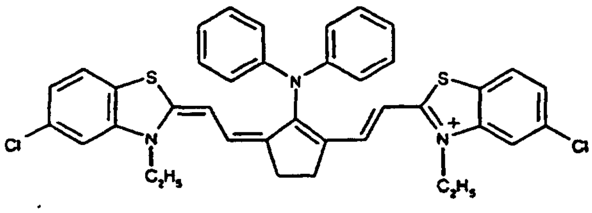 | 819 nm |
| 10 | 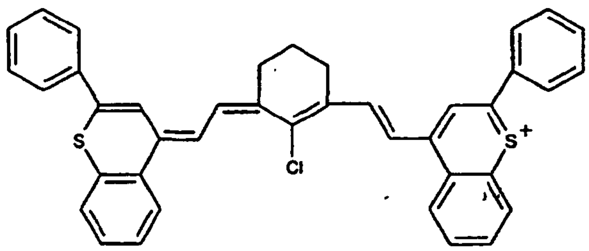 | 1080 nm |

TMPT represents trimethylolpropane trimethacrylate

Table 2

| No. | Chemical structure | Maximum absorption wavelength (Solvent) |
|---|---|---|
| 1 | 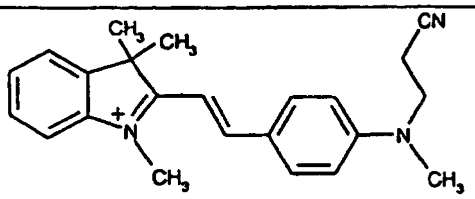 | 522 nm (acetonitrile) |
| 2 | 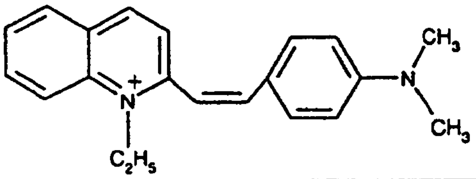 | 528 nm (acetonitrile) |
| 3 | 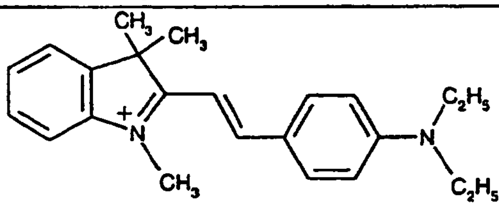 | 549 nm (acetonitrile) |
| 4 | 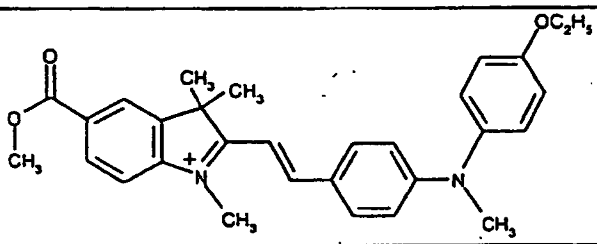 | 559 nm (acetonitrile) |
| 5 | 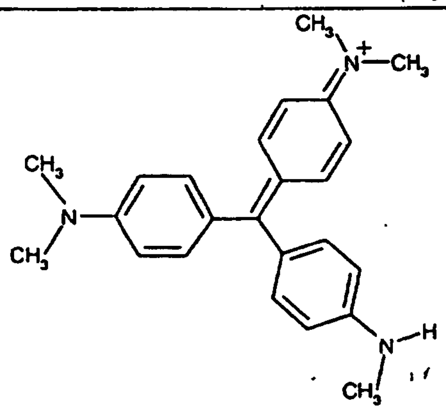 | 584 nm (acetonitrile) |

Table 2 (cont.)

| No. | Chemical structure | Maximum absorption wavelength (Solvent) |
|---|---|---|
| 6 | 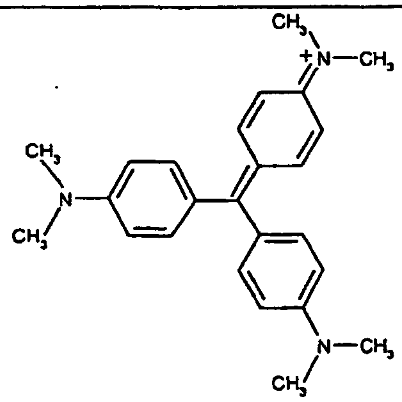 | 589 nm (acetonitrile) |
| 7 | 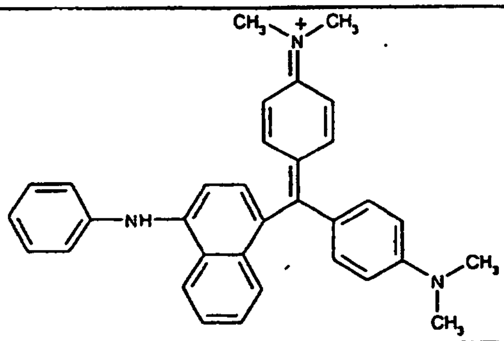 | 613 nm (acetonitrile) |
| 8 | 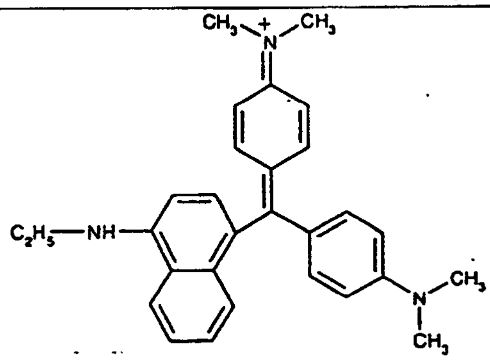 | 615 nm (acetonitrile) |
| 9 | 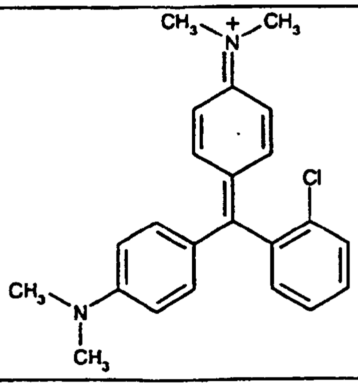 | 632 nm (acetonitrile) |

The counter anion [A$^-$] of the dye cation represented by general formula (1) above may be any desired anion such as p-toluenesulfonate ion, an organic carboxylate ion, perchlorate ion or a halide ion, or it may be a tetracoordinated boron anion represented by the following formula (3):

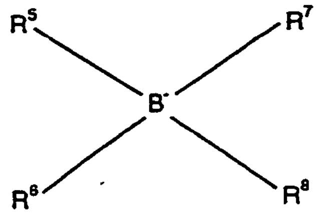

(3)

wherein $R^5$, $R^6$, $R^7$ and $R^8$ each independently represent an alkyl, aryl, acyl, aralkyl, alkenyl, alkynyl, silyl or heterocyclic group or a halogen atom.

$R^5$, $R^6$, $R^7$ and $R^8$ in general formula (3) above may also have substituents, as described for $R^1$, $R^2$, $R^3$ and $R^4$ in general formula (2) above.

The compositional ratio of the organic boron compound to the near infrared or visible light absorbing cationic dye compound of the invention is usually 1/5-1/0.05, and preferably 1/1-1/0.1, in terms of weight. From the standpoint of decoloration reaction and radical generating efficiency of the dye, it is generally preferred to use more organic boron compound than cationic dye.

The thermal polymerization initiator to be used for the invention is an organic peroxide catalyst or azo compound that generates radicals upon heating; for example, as organic peroxides there may be used benzoyl peroxide, dicumyl peroxide, diisopropyl peroxide, di-tert-butyl peroxide, tert-butylperoxy benzoate, 1,1-bis(tert-butylperoxy)-3,3,5-trimethylcyclohexane, 2,5-dimethyl-2,5-bis(tert-butylperoxy)hexine-3,3-isopropyl hydroperoxide, tert-butyl hydroperoxide, cumyl hydroperoxide, acetyl peroxide, bis(4-tert-butylcyclohexyl)peroxy dicarbonate, diisopropylperoxy dicarbonate, isobutyl peroxide, 3,3,5-trimethylhexanoyl peroxide or lauryl peroxide, and as azo compounds there may be used azobisisobutyronitrile and azobiscarbonamide. When considering ease of use, dicumyl peroxide, di-tert-butyl peroxide and tert-butyl hydroperoxide are particularly effective because of their satisfactory storage stability.

The polymerization initiator composition comprising a photopolymerization initiator and thermal polymerization initiator will usually be used in an amount of 0.01-20 parts by weight and preferably 0.05-15 parts by weight, per 100 parts by weight of the polymerizable unsaturated compound. If the polymerization initiator composition is used at less than 0.01 part the pre-polymerization for B-staging and the polymerization after B-staging will tend to be insufficient, while in an amount of greater than 20 parts by weight the strength of the cured product may be insufficient.

The compositional ratio of the photopolymerization initiator to thermal polymerization initiator is usually 0.1/5-5/0.1 and preferably 0.5/5-5/0.5, in terms of weight. If the ratio of the photopolymerization initiator to the thermal polymerization initiator is less than 0.1/5, the pre-polymerization may not proceed to the B-stage even with light irradiation of the pre-B-stage composition of the invention in the photosensitive wavelength of the photopolymerization initiator, while a ratio of greater than 5/0.1 may result in excessive pre-polymerization, such that the reaction may fail to halt at the B-stage and the resin may harden more than necessary.

According to the invention, visible light refers to light rays in a wavelength range of 380-780 nm, and near infrared light to light rays in a wavelength range of 780-1200 nm.

The light source used for the production of the prepreg as the B-stage of the polymerizable unsaturated compound according to invention may be a light source with spectral distribution in the photosensitive wavelength range of the photopolymerization initiator, and for example, a near-infrared lamp, sodium lamp, halogen lamp, fluorescent lamp or metal halide lamp may be used.

The lamp irradiation time for the production of the prepreg cannot be specified for all cases since it will differ depending on the effective wavelength range and output of the light source, the irradiation distance and the thickness of the composition, but it may usually be 0.01 hour or longer, and preferably 0.05 hour or longer.

The process for the production of a thermosetting prepreg composition according to the invention may be applied directly for the production of prepreg compositions in conventional unsaturated polyester resin systems or vinyl ester resin systems.

Thermosetting prepreg compositions produced in this manner harden rapidly upon heating due to the residual thermal polymerization initiator.

The present invention will now be further illustrated by way of examples and comparative examples. The "parts" in the examples are based on weight.

Example 1

A mixture of 0.03 part of the dye listed as No.3 in Table 1 (where the counter ion is n-butyltriphenyl borate): 1,1,5,5-tetrakis(p-diethylaminophenyl)-2,4-pentadienyl n-butyltriphenyl borate (hereunder referred to as "IRB", near infrared absorbing cationic dye by Showa Denko K.K.), 0.15 part of tetra-n-butylammonium n-butyltriphenyl borate (hereunder referred to as "P3B", boron compound by Showa Denko K.K.) and 1.0 part of tert-butyl peroxybenzoate (hereunder referred to as "Perbutyl Z", NOF Corporation) with 100 parts of a bisphenol A vinyl ester resin (Ripoxy R-802: Showa High Polymer Co., Ltd.) was used to impregnate a 10 cm x 10 cm, 1-ply glass fiber mat (#450 chopped strand mat: Asahi Fiber Glass Co., Ltd.) to a glass content of 30 wt%.

This composite material composition was then coated with a polyethylene terephthalate (Mylar, by DuPont) film and subjected to exposure with an AL-spot light (ALF-10) at 1 KW (RDS Corporation) as a light source including the wavelength range of 380-1200 nm, at a distance of 50 cm; the B-stage was reached at 10 minutes, and there was no alteration in the B-stage even after continued exposure for 120 minutes.

The B-stage resin obtained after 10 minutes of exposure was used as a thermosetting prepreg for examination of the storage stability at 30°C.

A 3-ply thermosetting prepreg that had been stored at 30°C in darkness for one month was subjected to hot pressure molding (175°C, 10 min, 50 kg/$cm^2$) to obtain a laminated sheet, the Barcol hardness was measured according to JIS K-6911 using a 934-1 Barcol hardness tester, and the flexural strength was also measured. The results are shown in Table 3.

Example 2

A mixture of 0.03 part of IRB, 0.20 part of tetra-n-butylammonium n-butyltri(p-tert-butylphenyl) borate (hereunder referred to as "BP3B", boron compound by Showa Denko K.K.) and 1.0 part of tert-butyl peroxyisopropyl carbonate (hereunder referred to as Trigonox R-350, Kayaku Akuzo K.K.) with 100 parts of a phenol novolac vinyl ester resin (Ripoxy H-630: Showa High Polymer Co., Ltd.) was used to impregnate a 10 cm x 10 cm, 1-ply aramid fiber cloth (Kevlar fiber cloth T-500, DuPont-Toray Co., Ltd.) to an aramid content of 40 vol%.

This composite material composition was then coated with a Mylar film and subjected to exposure with an AL-spot light (ALF-10) at 1 KW as a light source including the wavelength range of 380-1200 nm, the B-stage was reached at 10 minutes, and there was no alteration in the B-stage even after continued exposure for 10 minutes.

The B-stage resin obtained after 10 minutes of exposure was used as a thermosetting prepreg for examination of the storage stability at 30°C.

A 3-ply thermosetting prepreg that had been stored at 30°C for one month was subjected to hot pressure molding (175°C, 10 min, 50 kg/$cm^2$) to obtain a laminated sheet, the Barcol hardness was measured according to JIS K-6911 using a 934-1 Barcol hardness tester, and the flexural strength was also measured. The results are shown in Table 3.

Example 3

A mixture of 0.02 part of the visible light absorbing dye listed as No.4 in Table 2 (where the counter ion is chloride anion), 0.15 part of P3B and 1.0 part of Perbutyl Z with 100 parts of a vinyl ester resin (Ripoxy R-802) was used to impregnate a 10 cm x 10 cm, 1-ply #450 chopped strand mat (Asahi Fiber Glass Co., Ltd.) to a glass content of 30 wt%.

This composite material composition was then coated with a Mylar film and subjected to exposure with an AL-spot light (ALF-10) at 1 KW as a light source including the wavelength range of 380-1200 nm, the B-stage was reached at 10 minutes, and there was no alteration in the B-stage even after continued exposure for 10 minutes.

The B-stage resin obtained after 10 minutes of exposure was used as a thermosetting prepreg for examination of the storage stability at 30°C.

A 3-ply thermosetting prepreg that had been stored at 30°C for one month was subjected to hot pressure molding (175°C, 10 min, 50 kg/$cm^2$) to obtain a laminated sheet, the Barcol hardness was measured according to JIS K-6911 using a 934-1 Barcol hardness tester, and the flexural strength was also measured. The results are shown in Table 3.

Example 4

A mixture of 0.02 part of the dye listed as No.6 in Table 2 (where the counter ion is tetraphenyl borate), 0.20 part of BP3B and 1.0 part of Trigonox R-350 with 100 parts of a vinyl ester resin (Ripoxy H-630) was used to impregnate a 1-ply Kevlar fiber cloth T-500 (10 cm x 10 cm) to an aramid content of 40 vol%.

This composite material composition was then coated with a Mylar film and subjected to exposure with an AL-spot light (ALF-10) at 1 KW as a light source including the wavelength range of 380-1200 nm, the B-stage was reached by 10 minutes, and there was no alteration in the B-stage even after continued exposure for 10 minutes.

The B-stage resin obtained after 10 minutes of exposure was used as a thermosetting prepreg for examination of the storage stability at 30°C.

A 3-ply thermosetting prepreg that had been stored at 30°C for one month was subjected to hot pressure molding (175°C, 10 min, 50 kg/cm$^2$) to obtain a laminated sheet, the Barcol hardness was measured according to JIS K-6911 using a 934-1 Barcol hardness tester, and the flexural strength was also measured. The results are shown in Table 3.

Example 5

A mixture of 0.2 part of the visible light absorbing dye listed as No.7 in Table 2 (where the counter ion is tetraphenyl borate), 0.20 part of BP3B and 1.0 part of Perbutyl Z with 100 parts of a vinyl ester resin (Ripoxy R-802) was used to impregnate a 10 cm x 10 cm, 1-ply #450 chopped strand mat (Asahi Fiber Glass Co., Ltd.) to a glass content of 30 wt%.

This composite material composition was then coated with a Mylar film and subjected to exposure with an AL-spot light (ALF-10) at 1 KW as a light source including the wavelength range of 380-1200 nm, the B-stage was reached by 10 minutes, and there was no alteration in the B-stage even after continued exposure for 10 minutes.

The B-stage resin obtained after 10 minutes of exposure was used as a thermosetting prepreg for examination of the storage stability at 30°C.

A 3-ply thermosetting prepreg that had been stored at 30°C for one month was subjected to hot pressure molding (175°C, 10 min, 50 kg/cm$^2$) to obtain a laminated sheet, the Barcol hardness was measured according to JIS K-6911 using a 934-1 Barcol hardness tester, and the flexural strength was also measured. The results are shown in Table 3.

Comparative Example 1

A mixture of 4 parts of diphenylmethane diisocyanate (MDI) (ISONATE 143L, Dow Mitsubishi Chemical Ltd.) and 1.0 part of Perbutyl Z with 100 parts of a vinyl ester resin (Ripoxy R-802) was used to impregnate a 10 cm x 10 cm, 1-ply #450 chopped strand mat to a glass content of 30 wt%.

After then coating this composite material composition with a Mylar film and allowing it to stand in darkness at 40°C, the B-stage was reached at 24 hours.

When the B-stage resin was used as a thermosetting prepreg for examination of the storage stability at 30°C, the resin seeped out of the thermosetting prepreg within one week. It was therefore impossible to conduct a hardening test.

**Table 3**

| | Example 1 | Example 2 | Example 3 |
|---|---|---|---|
| Resin | R-802 | H-630 | R-802 |
| Fiber | #450 chopped strand mat 1-ply | KEVLAR fiber cloth T-500 1-ply | #450 chopped strand mat 1-ply |
| B-staging agent<br>Organic boron compound<br>Cationic dye<br>(Anionic portion of cationic dye) | P3B: 0.15<br>Tab.1 No.3: 0.03<br>(n-butyltriphenyl borate) | BP3B: 0.20<br>Tab.1 No.3: 0.03<br>(n-butyltriphenyl borate) | P3B: 0.15<br>Tab.2 No.4: 0.02<br>(chloride anion) |
| Initiator | Perbutyl Z: 1.0 | Trigonox R-350: 1.0 | Perbutyl Z: 1.0 |
| B-staging condition | AL spot light 10 min. irrad. | AL spot light 10 min. irrad. | AL spot light 10 min. irrad. |
| Prepreg storage stability (30°C darkness: Mylar film coating) | 1 month: normal | 1 month: normal | 1 month: normal |
| Properties of heat molded prepreg after 1 month storage | | | |
| Barcol hardness | 49 | 47 | 48 |
| Flexural strength (MP) | 172 | 320 | 169 |
| Flexural modulus (GP) | 8.1 | 20 | 8.0 |

Table 3 (cont.)

| | Example 4 | Example 5 | Comp. Ex. 1 |
|---|---|---|---|
| Resin | H-630 | R-802 | R-802 |
| Fiber | KEVLAR fiber cloth T-500 1-ply | #450 chopped strand mat 1-ply | #450 chopped strand mat 1-ply |
| B-staging agent Organic boron compound Cationic dye (Anionic portion of cationic dye) | BP3B: 0.20 Tab.2 No.6: 0.02 (tetraphenyl borate) | BP3B: 0.20 Tab.2 No.7: 0.02 (tetraphenyl borate) | MDI: 4.0 |
| Initiator | Trigonox R-350: 1.0 | Perbutyl Z: 1.0 | Perbutyl Z: 1.0 |
| B-staging condition | AL spot light 10 min. irrad. | AL spot light 10 min. irrad. | Standing for 24 hours in darkness, 40°C |
| Prepreg storage stability (30°C darkness: Mylar film coating) | 1 month: normal | 1 month: normal | Some of resin seeped out of prepreg after one week |
| Properties of heat molded prepreg after 1 month storage | | | |
| Barcol hardness Flexural strength (MP) Flexural modulus (GP) | 48 325 21 | 50 177 8.2 | Unmeasurable |

Example 6

A mixture of 0.1 part of IRB, 0.5 part of P3B and 1 part of Trigonox R-350 with 100 parts of an orthophthalic acid-based unsaturated polyester resin (Rigolac 1557, Showa High Polymer Co., Ltd.), with further mixture of 30 parts of calcium carbonate (product name: Softon 1200, Bihoku Funka Kogyo K.K.), was used to impregnate a 10 cm x 10 cm, 1-ply #450 chopped strand mat (Asahi Fiber Glass Co., Ltd.) to a glass content of 30 wt%.

This composite material composition was then coated with a Mylar film and subjected to exposure with an AL-spot light (ALF-10) at 1 KW as a light source including the wavelength range of 380-1200 nm, the B-stage was reached by 3 minutes, and there was no alteration in the B-stage even after continued exposure for 10 minutes.

The B-stage resin obtained after 3 minutes of exposure was used as a thermosetting prepreg for examination of the storage stability at 30°C.

A 3-ply thermosetting prepreg that had been stored at 30°C for one month was subjected to hot pressure molding (175°C, 10 min, 50 kg/$cm^2$) to obtain a laminated sheet, the Barcol hardness was measured according to JIS K-6911 using a 934-1 Barcol hardness tester, and the flexural strength was also measured. The results are shown in Table 4.

Example 7

A mixture of 0.03 part of the visible light-absorbing dye listed as No.6 in Table 2 (where the counter ion is tetraphenyl borate), 0.15 part of BP3B and 1.0 part of Trigonox R-350 with 100 parts of an isophthalic acid-based unsaturated polyester resin (Rigolac 2141, Showa High Polymer Co., Ltd.), with further mixture of 30 parts of calcium carbonate (product name: Softon 1200, Bihoku Funka Kogyo K.K.), was used to impregnate a 10 cm x 10 cm, 1-ply #450 chopped strand mat (Asahi Fiber Glass Co., Ltd.) to a glass content of 30 wt%.

This composite material composition was then coated with a Mylar film and subjected to exposure with an AL-spot light (ALF-10) at 1 KW as a light source including the wavelength range of 380-1200 nm, the B-stage was reached by 3 minutes, and there was no alteration in the B-stage even after continued exposure for 10 minutes.

The B-stage resin obtained after 3 minutes of exposure was used as a thermosetting prepreg for examination of the storage stability at 30°C.

A 3-ply thermosetting prepreg that had been stored at 30°C for one month was subjected to hot pressure molding (175°C, 10 min, 50 kg/$cm^2$) to obtain a laminated sheet, the Barcol hardness was measured according to JIS K-6911 using a 934-1 Barcol hardness tester, and the flexural strength was also measured. The results are shown in Table 4.

Comparative Example 2

A mixture of 1 part of magnesium oxide (Magmic, product of Kyowa Chemical Industries Co., Ltd.), 1.0 part of Perbutyl Z and 30 parts of calcium carbonate (Softon 1200) with 100 parts of an unsaturated polyester resin (Rigolac 2141) was used to impregnate a 10 cm x 10 cm, 1-ply #450 chopped strand mat to a glass content of 30 wt%.
When this composite material composition was then coated with a Mylar film and allowed to stand at 40°C, the B-stage was reached within 48 hours.
The B-stage resin was used as a thermosetting prepreg for examination of the storage stability at 30°C.
A 3-ply thermosetting prepreg that had been stored at 30°C for one month was subjected to hot pressure molding (175°C, 10 min, 50 kg/cm$^2$) to obtain a laminated sheet, the Barcol hardness was measured according to JIS K-6911 using a 934-1 Barcol hardness tester, and the flexural strength was also measured. The results are shown in Table 4.

Table 4

| | Example 6 | Example 7 | Comp. Ex. 2 |
|---|---|---|---|
| Resin | 1557 | 2141 | 2141 |
| Glass fiber | #450 chopped strand glass mat, 1-ply | | |
| B-staging agent Organic boron compound Cationic dye (Anionic portion of cationic dye) | P3B: 0.50 Tab.1 No.3: 0.1 (n-butyltriphenyl borate) | BP3B: 0.15 Tab.2 No.6: 0.03 (tetraphenyl borate) | MgO: 1.0 |
| Initiator | Trigonox R-350: 1.0 | Trigonox R-350: 1.0 | Perbutyl z: 1.0 |
| B-staging condition | AL spot light 3 min. irrad. | AL spot light 3 min. irrad. | Standing for 48 hours in darkness, 40°C |
| Prepreg storage stability (30°C darkness: Mylar film coating) | 1 month: normal | 1 month: normal | 1 month: normal |
| Properties of heat molded prepreg after 1 month storage | | | |
| Barcol hardness<br>Flexural strength (MP)<br>Flexural modulus (GP) | 50<br>189<br>7.8 | 50<br>180<br>7.5 | 49<br>177<br>7.4 |

Industrial Applicability

The present invention relates to a stable thermosetting prepreg composition with excellent storage stability and resistance to polymerization of the radical polymerizable unsaturated groups in the polymerizable unsaturated compound even after long-term storage, and to a process for its production; it is possible to successfully achieve consistent B-staging of a portion of the radical polymerizable unsaturated groups, for stable thickening.
Because the B-staging of the polymerizable unsaturated compound is accomplished by polymerization of the radical polymerizable unsaturated groups using a photopolymerization initiator included therein, the polymerization between the resin and the polymerizable unsaturated compound is carried out in a stable manner, and as a result it is possible to provide prepreg compositions which do not drip due to separation of the polymerizable unsaturated compounds in the prepregs and with excellent storage stability.

## Claims

1. A thermosetting prepreg composition prepared by photopolymerization of a composition comprising a polymerizable unsaturated compound containing an unsaturated polyester resin and/or vinyl ester resin, a fiber reinforcing material and/or filler, a photopolymerization initiator and a thermal polymerization initiator, for pre-polymerization in such a manner that a portion of the unsaturated groups of polymerizable unsaturated compound and the thermal polymerization initiator remain, wherein the photopolymerization initiator has photosensitivity in any desired wavelength range of visible light or the near infrared light region.

2. A thermosetting prepreg composition according to claim 1, wherein the thermal polymerization initiator is an organic peroxide catalyst.

3. A thermosetting prepreg composition according to claim 1 or 2, wherein the photopolymerization initiator with photosensitivity in any desired wavelength range of visible light or the near infrared light region is a combination of a cationic dye represented by the following general formula (1):

$$D^{+} \cdot A^{-} \qquad (1)$$

wherein $D^+$ is at least one selected from methine-, polymethine-, xanthene-, oxazine-, thiazine-, arylmethane- and pyrillium-based dye cations with photosensitivity to any desired wavelength range of visible light or the near infrared light region, and $A^-$ is any anion,
and an organic boron compound represented by the following general formula (2):

$Z^{+} \cdot$ 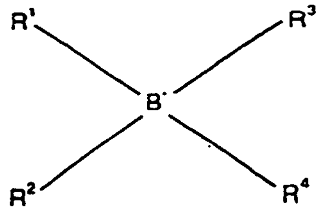 (2)

wherein $Z^+$ represents any cation, and $R^1$, $R^2$, $R^3$ and $R^4$ each independently represent an alkyl, aryl, acyl, aralkyl, alkenyl, alkynyl, silyl or heterocyclic group or a halogen atom.

4. A thermosetting prepreg composition according to claim 3, wherein the cationic portion ($D^+$) of the cationic dye which is a component of the photopolymerization initiator with photosensitivity in any desired wavelength range of visible light or the near infrared light region is a cation of a cyanine-, styryl- or triarylmethane-based dye as a polymethine-based dye.

5. A process for the production of a thermosetting prepreg, which comprises subjecting a composition comprising a polymerizable unsaturated compound containing an unsaturated polyester resin and/or vinyl ester resin, a fiber reinforcing material and/or filler, a photopolymerization initiator and a thermal polymerization initiator, to pre-polymerization by irradiation with visible light and/or near infrared light wherein the photopolymerization initiator has photosensitivity in any desired wavelength range of visible light or the near infrared light region.

**Patentansprüche**

1. Hitzehärtende Prepreg-Zusammensetzung, hergestellt durch Photopolymerisation einer Zusammensetzung, die eine polymerisierbare ungesättigte Verbindung, die ein ungesättigtes Polyesterharz und/oder Vinylesterharz enthält, ein Faserverstärkungsmaterial und/oder einen Füllstoff, einen Photopolymerisationsinitiator und einen Wärmepolymerisationsinitiator enthält, für die Präpolymerisation auf solche Weise, dass ein Teil der ungesättigten Gruppen der polymerisierbaren ungesättigten Verbindung und der Wärmepolymerisationsinitiator erhalten bleiben, wobei der Photopolymerisationsinitiator in jedem beliebigen Wellenlängenbereich im Bereich des sichtbaren Lichts oder des nahen Infrarotlichts lichtempfindlich ist.

2. Hitzehärtende Prepreg-Zusammensetzung nach Anspruch 1, worin der Wärmepolymerisationsinitiator ein organischer Peroxidkatalysator ist.

3. Hitzehärtende Prepreg-Zusammensetzung nach Anspruch 1 oder 2, worin der Photopolymerisationsinitiator, der in jedem beliebigen Wellenlängenbereich im Bereich des sichtbaren Lichts oder des nahen Infrarotlichts lichtempfindlich ist, eine Kombination eines kationischen Farbstoffs der folgenden allgemeinen Formel (1):

$$D^{+} \cdot A^{-} \qquad (1)$$

worin $D^+$ mindestens ein in jedem beliebigen Wellenlängenbereich im Bereich des sichtbaren Lichts oder des nahen Infrarotlichts lichtempfindliches Kation eines Farbstoffs, ausgewählt unter Farbstoffen auf Basis von Methin, Polymethin, Xanthen, Oxazin, Thiazin, Arylmethan und Pyrillium, ist und $A^-$ ein beliebiges Anion ist, und einer organischen Borverbindung der folgenden allgemeinen Formel (2) ist:

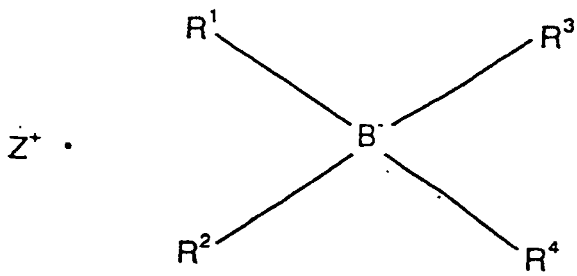

(2)

worin Z+ ein beliebiges Kation ist und $R^1$, $R^2$, $R^3$ und $R^4$ jeweils unabhängig voneinander eine Alkyl-, Aryl-, Acyl-, Aralkyl-, Alkenyl-, Alkinyl-, Silyl- oder heterocyclische Gruppe oder ein Halogenatom ist.

4. Hitzehärtende Prepreg-Zusammensetzung nach Anspruch 3, worin der kationische Teil ($D^+$) des kationischen Farbstoffs, der eine Komponente des Photopolymerisationsinitiators ist, der in jedem beliebigen Wellenlängenbereich im Bereich des sichtbaren Lichts oder des nahen Infrarotlichts lichtempfindlich ist, als Farbstoff auf Basis von Polymethin ein Kation eines Farbstoffs auf Basis von Cyanin, Styryl oder Triarylmethan ist.

5. Verfahren zur Herstellung eines hitzehärtenden Prepregs, welches die Präpolymerisation einer Zusammensetzung, die eine polymerisierbare ungesättigte Verbindung, die ein ungesättigtes Polyesterharz und/oder Vinylesterharz enthält, ein Faserverstärkungsmaterial und/oder einen Füllstoff, einen Photopolymerisationsinitiator und einen Wärmepolymerisationsinitiator enthält, durch Bestrahlung mit sichtbarem Licht und/oder nahem Infrarotlicht umfasst, wobei der Photopolymerisationsinitiator in jedem beliebigen Wellenlängenbereich im Bereich des sichtbaren Lichts oder des nahen Infrarotlichts lichtempfindlich ist.

## Revendications

1. Composition de préimprégné thermodurcissable, préparée par photopolymérisation d'une composition comprenant un composé insaturé polymérisable contenant une résine polyester et/ou une résine ester vinylique insaturées, un matériau renforçateur fibreux et/ou une charge, un amorceur de photopolymérisation et un amorceur de polymérisation thermique, pour une pré-polymérisation de telle sorte qu'une partie des groupes insaturés du composé insaturé polymérisable et l'amorceur de polymérisation thermique subsistent, **caractérisée en ce que** l'amorceur de photopolymérisation a une photo-sensibilité pour n'importe quelle longueur d'onde de la lumière visible ou de la lumière du proche infrarouge.

2. Composition de préimprégné thermodurcissable selon la revendication 1, **caractérisée en ce que** l'amorceur de polymérisation thermique est un catalyseur peroxyde organique.

3. Composition de préimprégné thermodurcissable selon la revendication 1 ou 2, **caractérisée en ce que** l'amorceur de photopolymérisation qui a une photo-sensibilité pour n'importe quelle longueur d'onde de la lumière visible ou de la lumière du proche infrarouge est une combinaison d'un colorant cationique, représenté par la formule générale (1) suivante :

$$D^{+} \cdot A^{-} \qquad (1)$$

dans laquelle $D^+$ est au moins un cation choisi parmi des cations de colorant, à base de méthine, polyméthine,

xanthène, oxazine, thiazine, arylméthane et pyrillium avec une photo-sensibilité pour n'importe quelle longueur d'onde de la lumière visible ou de la lumière du proche infrarouge, et $A^-$ est n'importe quel anion,
et un composé organique du bore, représenté par la formule générale (2) suivante :

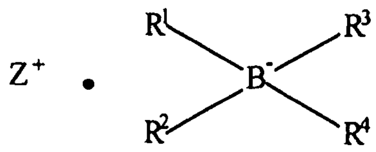

(2)

dans laquelle $Z^+$ représente n'importe quel cation, et $R^1$, $R^2$, $R^3$ et $R^4$ représentent chacun, de façon indépendante, un groupe alkyle, aryle, acyle, aralkyle, alcényle, alcynyle, silyle ou hétérocyclique ou un atome d'halogène.

**4.** Composition de préimprégné thermodurcissable selon la revendication 3, **caractérisée en ce** la partie cationique ($D^+$) du colorant cationique, qui est un composant de l'amorceur de photopolymérisation avec une photo-sensibilité pour n'importe quelle longueur d'onde de la lumière visible ou de la lumière du proche infrarouge, est un cation d'un colorant à base de cyanine, styryle ou triarylméthane comme un colorant à base de polyméthine.

**5.** Procédé de préparation d'un préimprégné thermodurcissable, qui consiste à soumettre une composition comprenant un composé insaturé polymérisable contenant une résine polyester et/ou une résine ester vinylique insaturées, un matériau renforçateur fibreux et/ou une charge, un amorceur de photopolymérisation et un amorceur de polymérisation thermique, à une pré-polymérisation par irradiation avec de la lumière visible ou de la lumière du proche infrarouge, **caractérisé en ce que** l'amorceur de photo-polymérisation a une photo-sensibilité pour n'importe quelle longueur d'onde de la lumière visible ou de la lumière du proche infrarouge.